Europäisches Patentamt

European Patent Office  (11) Publication number: **0 109 268** A2

Office européen des brevets

(19)

## (12) EUROPEAN PATENT APPLICATION

(21) Application number: **83306867.9**

(22) Date of filing: **10.11.83**

(51) Int. Cl.³: **B 05 B 7/02,** A 61 D 7/00, A 01 K 13/00

(30) Priority: **10.11.82 GB 8232056**

(43) Date of publication of application: **23.05.84** **Bulletin 84/21**

(84) Designated Contracting States: **DE FR GB NL SE**

(71) Applicant: **DIVERSEY ENGINEERING (EUROPE) LIMITED, Mili Lane, Riddings Derby, DE55 4BA (GB)**

(72) Inventor: **Ewington, Raymond John, 69 Meyrick Avenue, Luton Bedfordshire (GB)**
Inventor: **Claber, Charles Rodney, 27 Bridge Meadow, Denton Northamptonshire (GB)**

(74) Representative: **Boon, Graham Anthony, Elkington and Fife High Holborn House 52/54 High Holborn, London, WC1V 6SH (GB)**

(54) Spray gun.

㊗ A spray gun is provided particularly, though not exclusively, for spraying a sanitising liquid onto the udders of cows.

The spray gun comprising a body (1, 2) defining a passage through which a fluid can flow, and a valve member (8) movable between a closed position in which it prevents fluid flowing through the gun and an open position in which it permits such flow, the valve member being biassed by a spring (9) into the closed position. An elongate lever (16) extends through an opening (17) in the body (1, 2) and has an end portion (15) which engages the valve member (8). The lever (16) has a resilient flange (21) formed thereon which seals the opening (17) whilst allowing the length of the lever (16) to be pivoted with respect thereto to move the valve member (8) to its open position.

0109268

- 1 -

SPRAY GUN

This invention relates to a spray gun, and particularly, though not exclusively, to a spray gun for spraying a sanitising liquid onto the udders of cows.

According to the present invention there is provided a spray gun comprising a body defining a passage through which a fluid can flow; a valve member movable between a closed position in which it prevents fluid flowing through the gun and an open position in which it permits such flow, the valve member being biassed into the said closed position; and an elongate lever which extends through an opening in the said body and has an end portion which engages the valve member, the lever having a resilient flange formed thereon which seals the said opening whilst allowing the length of the lever to be pivoted with respect thereto to move the valve member to its open position.

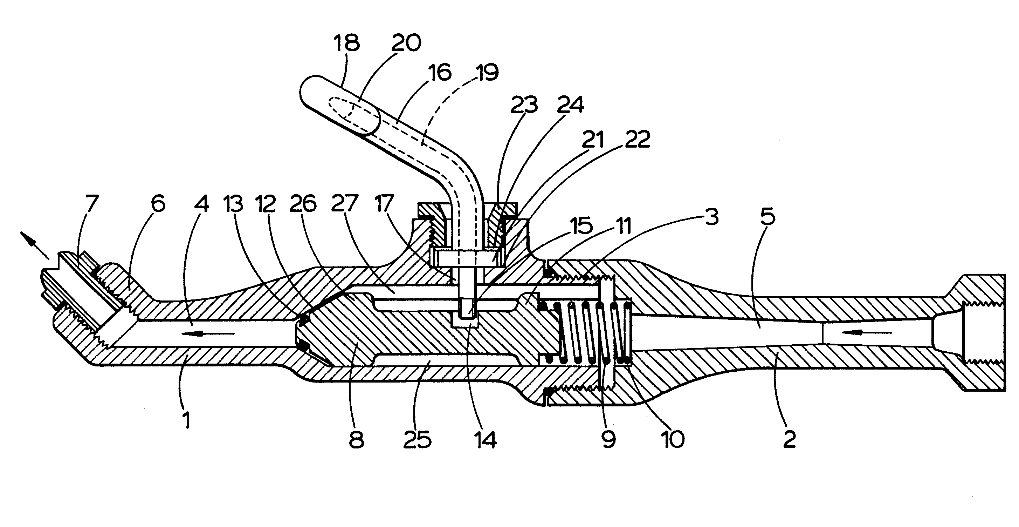

An embodiment of the invention is shown in the accompanying drawing which is a longitudinal section through a spray gun for use in spraying liquids onto the udders of cows.

The illustrated embodiment comprises a first body member 1 and a second body member, or stem, 2 connected to the first body member 1 by a screw thread connection 3. The body members are preferably of a moulded plastic, for example nylon. The body members 1 and 2 define longitudinal, aligned passages 4 and 5 for fluid to flow through the gun in the direction indicated by the arrows. At its downstream end the body member 1 has a cranked portion 6 in which is mounted a nozzle 7.

The upstream end of the passage 4 is of an enlarged cross-section and defines a chamber 25 in which a valve member 8 is slidably received. The valve member 8 has a key 26 which slides in a keyway 27 to keep the valve member 8 in the correct angular position. The valve member 8 is biassed in a downstream direction by means of a compression spring 9, one end of which bears against an annular shoulder 10 formed on the body member 2 and the other end of which bears on ribs 11 which are formed on the valve member 8. The downstream end of the valve member 8 has an asymmetrically frusto-conical surface 12 which bears against a correspondingly shaped surface of the body member 1. An annular recess is formed in the surface 12 which carries an O-ring 13. The O-ring 13 is of a resilient material, such as rubber, for example ethylene propylene rubber, a fluorocarbon rubber (e.g. that sold under the Trade Mark VITON) or another rubber which, preferably like the two mentioned above, is resilient to the iodine contained in many udder sanitising liquids. The O-ring 13 is arranged to be in a sealing contact with the corresponding surface of the body member 1.

Intermediate its ends the valve member 8 is provided with a slot-shaped recess 14 extending parallel to the length of the valve member in which is received an end portion 15 of a lever 16. The end portion has flats formed on opposite sides thereof so that the cross-section thereof is similar to that of the recess 14. The lever 16 passes through an opening 17 in the wall of the body member 1 so that the opposite end portion 18 thereof can be moved by an operator. The lever 16 has an insert 19 formed of a rigid material, for example stainless steel, and the insert is encased, except for the portion 15, by a sheath 20 of a resilient material, such as rubber, for example ethylene propylene rubber, a fluorocarbon rubber (e.g. that sold under the Trade Mark VITON), or another rubber which, preferably, like the two mentioned above is resilient to iodine. The portion of the sheath 20 adjacent the end portion 15 is of enlarged diameter and defines a flange 21. The lower surface of the flange 21 is in engagement with an annular shoulder 22 surrounding the opening 17. The lever is held in position by a nut 23 which is connected by a screw thread connection to the body member 1. A low friction plastic washer 24 is inserted between the nut 23 and the flange 21 to prevent the latter being twisted during tightening of the former. Because the cranked portion 6 is an integral part of the body member 1 which carries the lever 16, the lever 16 and the nozzle 7 are necessarily always correctly aligned with one another. In an alternative form of the gun the cranked portion 6 is omitted and the nozzle 7 points directly ahead.

In use, the upstream end of the spray gun is connected to a source of fluid under pressure which it is desired to spray. The pressure of the fluid may be a high pressure or it may be a low pressure (for example 0.25 bar), since even when the pressure is low the presence of the spring 9 ensures adequate sealing to prevent unintentional flow of fluid through the spray gun. When the operator wishes the fluid to flow out through the nozzle 7 he depresses the end 18 of the lever 16. This causes the lever to pivot about a pivot point which can be considered as being located in the flange 21. The flange itself remains in firm contact with the shoulder 22, thus ensuring that no fluid can leak from the interior of the gun through the opening 17. Pivotal movement of the lever 16 causes the end portion 15 thereof to move the valve member 8 in an upstream direction, so as to bring the O-ring 13 out of contact with the body portion 1 and thus permitting fluid to flow past the valve member 8. It will be appreciated that in order for the above mentioned pivotal movement of the lever 16 to occur it is necessary that the end portion 15 should be only a loose fit in the recess 14.

The lever 16 can be removed when it becomes worn, by undoing the nut 23, and replaced by a new lever 16. This can be done without having to disassemble the two body members 1 and 2.

0109268

- 5 -

<u>CLAIMS</u>:

1.        A spray gun comprising a body defining a passage through which a fluid can flow; a valve member movable between a closed position in which it prevents fluid flowing through the gun and an open position in which it permits such flow, the valve member being biassed into the said closed position; and an elongate lever which extends through an opening in the said body and has an end portion which engages the valve member, the lever having a resilient flange formed thereon which seals the said opening whilst allowing the length of the lever to be pivoted with respect thereto to move the valve member to its open position.

2.        A spray gun as claimed in claim 1, wherein the said body comprises an upstream member and a downstream member connected together.

3.        A spray gun as claimed in claim 1 or 2, wherein the downstream end of the body has a nozzle formed integrally therewith.

4.        A spray gun as claimed in claim 3, wherein the axis of the nozzle is cranked with respect to the remainder of the said body.

5.        A spray gun as claimed in any preceding claim, wherein the valve member is movable longitudinally of the said body between the open and closed positions.

6.        A spray gun as claimed in claim 5, wherein the valve member is keyed to the said body for the said longitudinal movement by a key and keyway arrangement.

7.        A spray gun as claimed in any preceding claim, wherein the valve member has a recess in the peripheral surface thereof, and the said end portion of the lever is a loose fit therein.

8. A spray gun as claimed in any preceding claim, wherein the downstream end of the valve member is frusto-conical and, when the valve member is in its closed position, mates with a frusto-conical seat formed within the said body.

9. A spray gun according to claim 8, wherein the frusto-conical end of the valve member and the frusto-conical seat are both asymmetrical.

10. A spray gun according to claim 8 or 9, wherein the frusto-conical end of the valve member carries a sealing O-ring.

11. A spray gun according to any preceding claim, wherein the lever comprises an insert of a rigid material and a sheath of a resilient material which covers the insert except for the said end portion thereof.

12. A spray gun according to claim 11, wherein the resilient flange is integral with the resilient sheath.

13. A spray gun according to any preceding claim, wherein the resilient flange is urged into sealing engagement with a shoulder formed on the body by a member which is removable to allow the lever to be removed from the body.

14. A spray gun according to claim 13, wherein the removable member is screw-threaded.

15. A spray gun according to claim 14, wherein a low-friction washer is interposed between the removable member and the flange to prevent damage to the latter.

1/1

0109268